# EUROPÄISCHE PATENTSCHRIFT

(11) **EP 0 553 124 B1**
(45) Veröffentlichungstag und Bekanntmachung des Hinweises auf die Patenterteilung: **29.05.1996**
(21) Anmeldenummer: 91917213.0
(22) Anmeldetag: 08.10.1991
(51) Int. Cl.: B25D 17/08, B23B 31/00

(54) **EINRICHTUNG AN HANDWERKZEUGMASCHINEN**
DEVICE FOR HAND MACHINE-TOOLS
DISPOSITIF POUR MACHINES-OUTILS MANUELLES

(30) Priorität: 16.10.1990 DE 4032739; 16.10.1990 DE 4032796
(43) Veröffentlichungstag der Anmeldung: 04.08.1993
(73) Patentinhaber: ROBERT BOSCH GMBH, 70442 Stuttgart (DE)
(72) Erfinder: BLÖCHLE, Hans, D-7000 Stuttgart (DE); WANNER, Karl, D-7022 Leinfelden-Echterdingen (DE)
(86) Internationale Anmeldenummer: DE9100787
(87) Internationale Veröffentlichungsnummer: WO9206823

(56) Entgegenhaltungen:
- EP-A- 0 147 830
- WO-A-86/00247
- DE-A- 3 413 005
- DE-A- 3 429 419
- DE-A- 3 501 690
- FR-A- 2 331 410
- FR-A- 2 349 413
- GB-A- 2 158 376
- US-A- 4 106 573

## Beschreibung

### Stand der Technik

Die Erfindung geht aus von einer Einrichtung an Handwerkzeugmaschinen, insbesondere Handbohr- und/oder Schlaggeräten nach dem Oberbegriff des Anspruchs 1.

Eine derartige Handwerkzeugmaschine ist aus der WO-A-86/00247 bekannt. Dort wird das Werkzeug jedoch in ein Bohrfutter mit drei symmetrisch angeordneten, verstellbaren Spannbacken eingesetzt, wobei die Spannbacken in entsprechend symmetrisch an einem Adapter angeordneten Drehmitnahmenuten eingreifen. Der Adapter wird dort im Bohrfutter festgespannt, wobei die Handwerkzeugmaschine nur im Bohrbetrieb oder im sogenannten Schlagbohrbetrieb verwendet werden kann. Das Spannfutter überträgt dabei die Schläge durch eine Axialbewegung auf den Adapter bzw. auf das Werkzeug. Dadurch werden relativ große Massen mitbeschleunigt, welche die Schlagwirkung erheblich beeinträchtigen.

Aus der WO-A-88/09245 sind jedoch Handwerkzeugmaschinen für Bohr- und/oder Schlaggeräte bekannt, bei denen das in der Werkzeugaufnahme eingesetzte Werkzeug axial beweglich aufgenommen und geführt ist, so daß die Schläge im sogenannten Bohrhammer- oder Meißelbetrieb nur auf das Schaftende des Werkzeugs auftreffen. Die Schlagwirkung dieser Geräte ist daher erheblich effektiver. Dort lassen sich jedoch nur Werkzeuge mit ungleichmäßig am Umfang verteilten offenen Nuten einsetzen. Diese asymmetrisch angeordnete Anordnung der Drehmitnehmer verhindert eine universelle Verwendung der dort eingesetzten Werkzeuge, so daß diese nicht für andere Werkzeughalter, wie Bohrfutter, kompatibel sind. Werden derartige Werkzeuge in Spannfutter mit Futterbacken eingesetzt, besteht die Gefahr, daß die Futterbacken teilweise in die vorhandenen Nuten eingreifen, was zu einer exzentrischen Einspannung führt.

In die erfindungsgemäße Einrichtung werden erfindungsgemäße Werkzeuge nach Anspruch 6 eingesetzt. Ein Werkzeug bzw. Adapter nach dem Oberbegriff dieses Anspruchs ist aus der WO-A-86/00247 bekannt. Aus der DE-A-34 29 419 ist ferner ein Bohrwerkzeug bekannt, das sich sowohl in Bohrfuttern mit drei Spannbacken als auch in Werkzeughaltern von Bohrhämmern einsetzen läßt. Die Werkzeuge besitzen teilweise geschlossene Nuten zur Verriegelung in den Bohrhämmern. Diese Nuten werden jedoch im Schlagbetrieb stark belastet. Bei ausgeschlagenen Schäften besteht ferner die Gefahr, daß sich das Werkzeug unbeabsichtigt löst. Diese Werkzeuge sind für Bohrhämmer mit in der Aufnahmebohrung fest angeordneten Drehmitnahmeleisten jedoch nicht geeignet, da ihnen dafür eine Axialverriegelung fehlt.

Mit der vorliegenden Erfindung wird angestrebt, Werkzeughalter und Werkzeugschäfte von Handwerkzeugmaschinen so aufeinander abzustimmen, daß die Werkzeuge sowohl in Maschinen mit festen Drehmitnahmen als auch in Maschinen mit Spannbackenfutter zuverlässig verwendbar sind.

### Vorteile der Erfindung

Die erfindungsgemäße Einrichtung mit den kennzeichnenden Merkmalen des Anspruchs 1 hat den Vorteil, daß sich mit ihr hohe Drehmomente auf speziell ausgebildete Werkzeuge mit drei gleichmäßig über den Umfang verteilten offenen Nuten kraftschonend übertragen lassen. Gleichzeitig ist zum Schlagbohren oder Meißeln eine begrenzte Axialbeweglichkeit des Werkzeuges gegeben. Die erfindungsgemäße Einrichtung ist somit geeignet für einen wahlweisen Einsatz von bohrfuttertauglichen Werkzeugen in Werkzeughaltern von Bohrhämmern und Schlagbohrmaschinen für alle Anwendungszwecke.

Die Einrichtung ermöglicht die Verwendung nur einer einzigen Schaftform für alle Arten von Werkzeugköpfen und alle Arten von bohrenden oder schlagenden Handwerkzeugmaschinen ohne Einbuße bei der Drehmitnahme, des exakten Rundlaufs oder der Axialbeweglichkeit.

Durch die in den von Anspruch 1 abhängigen Ansprüchen aufgeführten Maßnahmen sind vorteilhafte Weiterbildungen und Verbesserungen der erfindungsgemäßen Einrichtung möglich. Die radial längere Ausbildung eines der Drehmitnehmer verhindert zuverlässig ein Einsetzen des Werkzeugs in falscher Drehlage, was zu Fehlverriegelungen führen kann. Eine Abrundung des längeren Drehmitnehmers ermöglicht eine entsprechende Ausrundung der tieferen Nut des Werkzeugs, was der Festigkeit des Schaftes zugute kommt.

Der längere Drehmitnehmer ist ebenfalls aus Festigkeitsgründen vorteilhaft gegenüber dem Verriegelungselement angeordnet. Die Aufnahmebohrung ist mit vorzugsweise 12 bis 13 mm so gewählt, daß ein möglichst großer tragender Schaftquerschnitt gegeben ist. Die damit ausgerüsteten Werkzeuge sind andererseits noch handlich und leicht und passen gleichfalls in Bohrfutter mit 13 mm Öffnungsweite.

Das zugehörige Werkzeug mit den kennzeichnenden Merkmalen des Anspruchs 6 hat den Vorteil, daß seine Schaftausbildung für alle Anwendungszwecke wie reines Bohren, Schlagbohren oder Meißeln sowie sowohl für Bohrfutter als auch für Werkzeughalter mit Drehmitnehmern gleichermaßen geeignet ist. Dies ermöglicht die Verwendung nur einer einzigen Schaftform für alle Arten von Werkzeugköpfen und Handwerkzeugmaschinen ohne Einbußen beim übertragbaren Drehmoment oder der Axialbeweglichkeit. Die Anbringung je einer Anfasung an den Nuträndern der offenen Nuten bewirkt bei Bohrwerkzeugen in Dreibackenfuttern ein formschlüssiges Eingreifen der Futterbacken in den Schaft mit erhöhter Sicherheit gegen Durchdrehen. Die gleiche Breite aller Nuten bzw. gleicher Abstand der Anfasungen stellt auch eine einwandfreie Zentrierung des Werkzeugs in Backenfuttern sicher. Bei geschlagenen Werkzeugen bietet mindestens eine am Schaftende verlägerte Seitenwand der Nut einen formschlüssigen Riegel, der auch bei nur lose gespannten Futterbacken ein Herausfallen mit Sicherheit verhindert. Nicht zuletzt verhindert die charakteristische Form des Schaftes eine Verwechslung mit marktüblichen Werkzeugen. Dies könnte andernfalls bei mangelhafter Verriegelung zu einer Unfallgefahr werden.

Die in den weiteren abhängigen Ansprüchen aufgeführten Maßnahmen stellen vorteilhafte Weiterbildungen und Verbesserungen des erfindungsgemäßen Werkzeugs dar. Besonders fertigungsgünstig ist es, den durch die verlängerte Seitenwand gebildeten Riegel am Schaftende durch Anbringung einer zum Ende hin auslaufenden Anfasung am übrigen Nutrand zu bilden. Die Winkellage der Anlageflächen entspricht genau dem Winkel von 120°, unter dem die Flanken der Futterbacken stehen, sodaß diese an der gesamten Anlagefläche anliegen. Die Anordnung einer allseits geschlossenen Nut auf einer zwischen den offenen Nuten verbleibenden Rippe führt zu einem ungeschwächten Nutrand zur Werkzeugverriegelung. Damit wird einem möglichen Ausschlagen der geschlossenen Nut an ihren Enden abgeholfen. Ein rechteckiger Querschnit der offenen Nuten hat den Vorteil einer kostengünstigen Fertigung durch einfaches Fräsen. Eine der offenen Nuten tiefer auszuführen, erleichtert bei Bohrhammer-Werkzeugaufnahmen mit ebenfalls einem längeren Drehmitnehmer das lagerichtige Einführen und beugt einer möglichen Fehlverriegelung vor. Die tiefere Nut wird aus Festigkeitsgründen vorteilhaft gegenüber der geschlossenen Nut angeordnet und ausgerundet. Damit können ohne nennenswerte Schaftschwächung hohe Drehmomente übertragen werden. Der Schaftdurchmesser ist mit vorzugsweise 12 bis 13 mm so gewählt, daß die Werkzeugschäfte problemlos in Bohrfuttern mit 13 mm Öffnungsweite gespannt werden können und trotzdem ein möglichst großer tragender Schaftquerschnitt gegeben ist. Der gewählte Querschnitt ist für Werkzeuge bis ca. 30 mm Bohrkopfdurchmesser ausreichend.

### Zeichnung

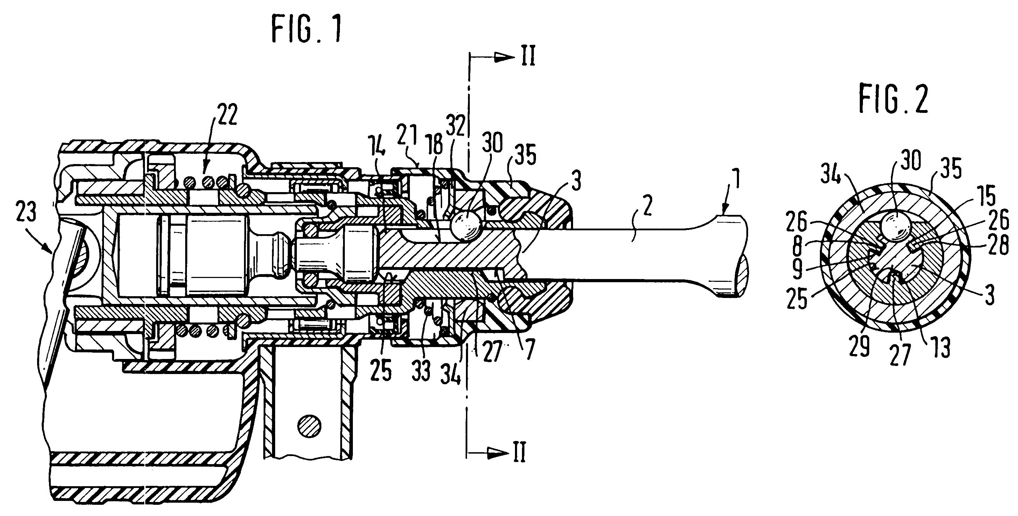

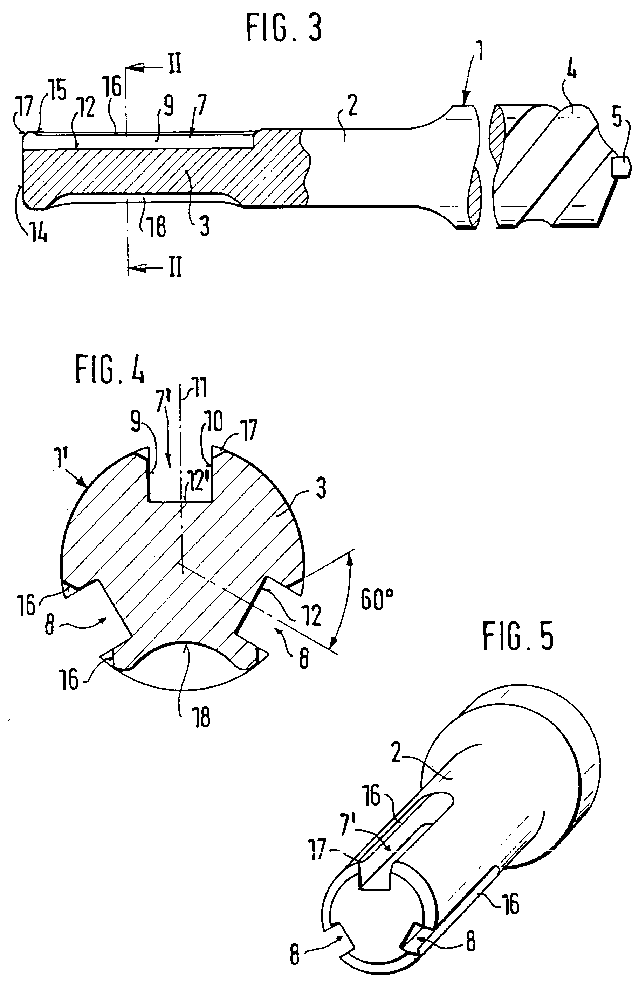

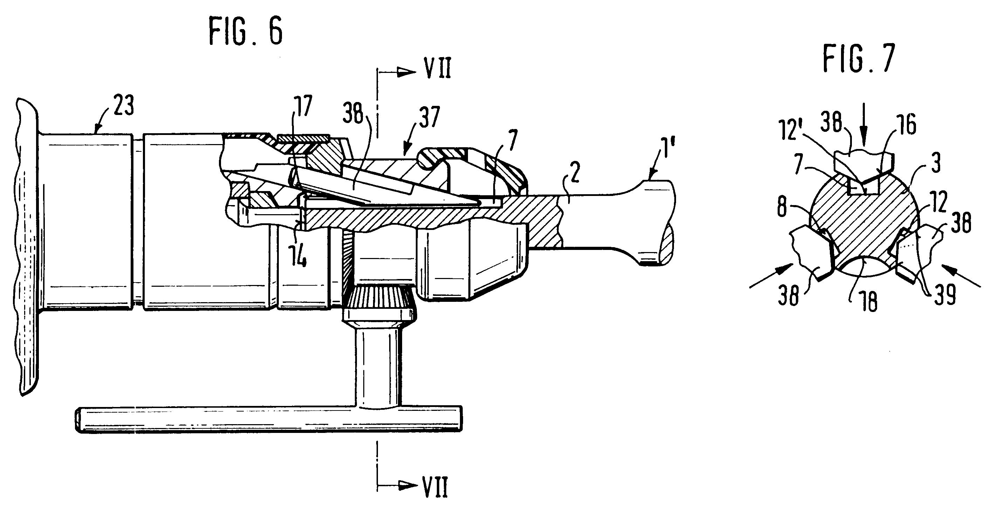

Zwei Ausführungsbeispiele der Erfindung sind in der Zeichnung dargestellt und in der nachfolgenden Beschreibung näher erläutert. Figur 1 zeigt eine erfindungsgemäße Einrichtung im Längsschnitt und Figur 2 einen Querschnitt gemäß Linie II-II in Figur 1. Figur 3 zeigt ein Werkzeug im Längsschnitt. Ein zweites Ausführungsbeispiel ist in Figur 4 im Querschnitt und in Figur 5 in perspektivischer Ansicht gezeigt. Figur 6 zeigt ein in ein Bohrfutter eingesetztes Werkzeug und Figur 7 einen Schnitt gemäß VII-VII in Figur 6.

### Beschreibung der Ausführungsbeispiele

Ein Werkzeug 1 zum Bohren, Meißeln, Feilen oder dergleichen weist einen Schaft 2 auf, der an einem Ende ein Einsteckende 3 trägt. Am anderen Ende ist er mit einem beliebigen Werkzeugkopf 4 ausgestattet. Im ersten Ausführungsbeispiel ist die ein Bohrer mit Hartmetalleinsatz 5 (vgl. Figur 3). Das Einsteckende 3 hat einen im wesentlichen kreisrunden Querschnitt mit einem Durchmesser von etwa 11 bis 13 mm, vorzugsweise 12 mm. Dieser ist unterbrochen von drei in Achsrichtung des Schaftes 2 verlaufenden gleichbreiten Nuten 7, 8 (siehe Figur 2). Diese weisen parallel zueinander verlaufende ebene Seitenwände 9, 10 auf, die parallel zu einer in Bezug auf den Schaft radialen, sich in Längsrichtung der jeweiligen Nut 7, 8 in deren Mitte erstreckenden Mittelebene 11 ausgerichtet sind. Die Nuten 8 weisen einen senkrecht zu den Seitenwänden 9, 10 ausgerichteten ebenen Nutgrund 12 auf, so daß sich zunächst ein rechteckiger Nutquerschnitt ergibt. Die Nut 7 hat einen ausgerundeten Nutgrund 13. Zum Schaftende 14 hin sind die Nuten 7, 8 offen, so daß Drehmitnehmer eines Werkzeughalters vom Schaftende 14 aus in die Nuten hineingeschoben werden können. Die drei Nuten 7, 8 sind rotationssymmetrisch unter einem Winkelabstand von 120° am Umfang des Einsteckendes 3 verteilt angeordnet.

Nutränder 15 begrenzen die Seitenwände 9, 10 nach außen hin. Die Nutränder 15 sind über den größen Teil der Nutlänge mit Anfasungen versehen, die schmale, unter einem Winkel von 60° zur Mittelebene 11 der Nut stehende Anlageflächen 16 bilden (siehe Figur 3). Die Anlageflächen 16 laufen zum Schaftende 14 hin aus, so daß in diesem Bereich die ungeschwächten Nutränder 15 bzw. die radial verlängerten Seitenwände 9, 10 als Sperrglieder 17 stehen bleiben. Für die Sperrglieder 17 reicht eine axiale Länge von 1 bis 2 mm aus. Die Nut 7 ist tiefer eingeschnitten als die anderen beiden Nuten 8. Die flachen Nuten 8 sind etwa 2 bis 2,5 mm tief. Die Breite der Nuten beträgt vorzugsweise 3 bis 4 mm. Die tiefere Nut 7 ist etwa 3 bis 3,5 mm tief.

Der tieferen Nut 7 diametral gegenüberliegend ist eine zum Schaftende 14 hin geschlossene Nut 18 angeordnet. Sie befindet sich auf der Rippe 19 zwischen den beiden flacheren Nuten 8, berührt diese Nuten jedoch nicht. Die Nut 18 ist wie die anderen Nuten 7 und 8 zum Werkzeugkopf 4 hin geschlossen. Sie dient dem Eingriff eines kugel- oder walzenförmigen Verriegelungskörpers, der später noch beschrieben wird.

Das Werkzeug 1 ist in eine Einrichtung zur Übertragung einer Dreh- und/oder einer Schlagbewegung auf das Werkzeug eingesetzt. Zu der Einrichtung gehört ein Werkzeughalter 21, der sich an ein Schlagwerk 22 eines Bohrhammers 23 anschließt. Der Werkzeughalter 21 weist zentrisch eine Aufnahmebohrung 25 auf. In die Aufnahmebohrung 25 greifen drei in Achsrichtung der Aufnahmebohrung 25 verlaufende Drehmitnehmer 26, 27 ein. Die Drehmitnehmer sind rotationssymmetrisch unter einem Winkelabstand von 120 Grad zueinander angeordnet. Der Drehmitnehmer 27 ist radial länger ausgebildet als die beiden anderen kürzeren Drehmitnehmer 26. Die Drehmitnehmer 26, 27 weisen ebene Flanken 28 auf, die parallel zueinander verlaufen. Die Drehmitnehmer 26, 27 liegen mit ihren Flanken 28 an den Seitenwänden 9, 10, im Betrieb zumindest an den jeweils in Drehrichtung vorne liegenden Seitenwänden 9 an. Die Nuten 7, 8 werden also von den Drehmitnehmern ausgefüllt. Alle Drehmitnehmer sind gleich breit. Einer der Drehmitnehmer 27 ist jedoch radial länger als die beiden anderen Drehmitnehmer 26 ausgebildet. Der längere Drehmitnehmer 27 kann wie die anderen einen rechteckigen Querschnitt aufweisen. Besonders vorteilhaft ist es jedoch, wenn der Teil, um den er länger ist, eine abgerundete Vorderkante 29 bildet. Gegenüber dem längeren Drehmitnehmer 27 befindet sich ein Verriegelungskörper 30, der in die geschlossene Nut 18 im Werkzeug 1 eingreift. Die Länge der geschlossenen Nut 18 beziehungsweise die geringe axiale Ausdehnung des Verriegelungskörpers 30 stellen eine begrenzte axiale Beweglichkeit des Werkzeugs 1 in dem Werkzeughalter 21 sicher. Der in die tiefere Nut 7 eingreifende Drehmitnehmer 27 verhindert, daß das Werkzeug 1 in falscher Drehlage in den Werkzeughalter 21 eingesetzt werden kann und stellt sicher, daß der Verriegelungskörper 30 in jeden Fall in die geschlossene Nut 18 eingreift.

Der Verriegelungskörper 30 wird von einem axial verschieblichen Halteblech 32 in seine in den Figuren gezeigte verriegelnde Stellung gedrängt. Das Halteblech 32 ist zu diesem Zweck von einer Druckfeder 33 belastet. Der Verriegelungskörper 30 liegt in seiner verriegelten Stellung radial an einem Haltering 34 an. Dieser Haltering 34 kann von einer Schiebehülse 35 axial in Richtung zum Bohrhammer 23 hin verschoben werden, so daß der Verriegelungskörper 30 radial ausweichen kann.

Die erfindungsgemäße Einrichtung wird in Betrieb gesetzt, indem das Werkzeug 1 in die Aufnahmebohrung 25 des Werkzeughalters 21 eingeführt und soweit gedreht wird, bis der Drehmitnehmer 27 in die vertiefte Nut 7 eingeführt werden kann. Durch axialen Druck auf das Werkzeug 1 wird der Verriegelungskörper 30 gegen das Halteblech 32 axial nach innen und radial nach außen gedrängt, so daß das Werkzeug vollständig in die Aufnahmebohrung 25 einschiebbar ist. Der Verriegelungskörper 30 wird durch den federbelasteten Haltering anschließend nach radial einwärts gedrängt und rastet in die geschlossene Nut 18 ein. Im Betrieb des Bohrhammers wird der Werkzeughalter 21 drehend angetrieben, so daß die Drehmitnebmer 26, 27 über ihre in Drehrichtung vorderen Flanken 28 ein Drehmoment auf das Werkzeug 1 übertragen. Die symmetrische, von drei Seiten erfolgende Krafteinleitung in den Schaft 2 erlaubt auf schonde Weise die Übertragung besonders hoher Drehmomente. Gleichzeitig tritt durch den rotationssymmetrischen Eingriff eine Zentrierwirkung auf das Werkzeug 1 ein, was bei nur zwei Drehmitnehmern nicht der Fall ist.

Zum Lösen des Werkzeugs wird die Schiebehülse 35 vom Werkzeug 1 weg zurückgezogen. Die Kugel 30 kann nun radial ausweichen und aus der geschlossenen Nut 18 heraustreten, um das Werkzeug aus dem Werkzeughalter 21 zu entnehmen. Das Werkzeug 1 kann außer in der erfindungsgemäßen Einrichtung auch in handelsüblichen Bohrfuttern mit drei rotationssymmetrisch Backen eingesetzt werden. Diese greifen dann teilweise in die offene Nuten 7, 8 des Werkzeugs 1 ein.

Die Figuren 4 und 5 zeigen ein zweites Ausführungsbeispiel des erfindungsgemäßen Werkzeugs. Das Werkzeug 1' unterscheidet sich vom ersten Ausführungsbeispiel nur durch den nicht ausgerundeten Nutgrund 12' an der tieferen Nut 7'.

In den Figuren 6 und 7 ist ein Werkzeug 1' des zweiten Ausführungsbeispiels in einen als Dreibackenfutter 37 ausgebildeten Werkzeughalter einer Bohrmaschine oder eines Bohrhammers 23 eingesetzt. Das Backenfutter 37 hat drei Futterbacken 38, die jeweils unter 120° aufeinander zulaufende nach innen gerichteten Flanken 39 aufweisen. Die Futterbacken 38 greifen in die Nuten 7, 8 ein und liegen an den Anlageflächen 16 an. Das Werkzeug 1' ist gemäß Figur 6 so weit in das Bohrfutter 21 hineingeschoben, daß das Schaftende 14 und die Sperrglieder 17 außerhalb des Eingriffsbereichs der Futterbacken 38 gelangen. Dadurch wird selbst bei nicht fest angezogenen Futterbacken 38 mit Sicherheit verhindert, daß das Werkzeug 2 aus dem Bohrfutter herausrutschen kann und andererseits eine begrenzte Axialbeweglichkeit des Werkzeugs sichergestellt. Die Sperrglieder 17 wirken dabei als Anschlag für die Futterbacken 38.

Die Nuttiefe reicht auch dafür aus, daß die Futterbacken 38 mit jeweils unter 120° aufeinander zulaufenden Flanken 39 zwar die Anlageflächen 16, nicht aber den Nutgrund 12 bzw. 12' berühren.

Die Erfindung beschränkt sich nicht auf die konkrete Ausgestaltung der Ausführungsbeispiele. So kann das Werkzeug mit dem abgerundeten Nutgrund 12 ebenso in Bohrfutter eingesetzt werden wie umgekehrt ein flacher Nutgrund für Werkzeuhhalter von Bohrhämmern tauglich ist. Die Sperrglieder 17 sind allgemein als radial verlängerte Seitenwände 9, 10 ausgebildet; sie können z.B. bei nicht angefasten Nuträndern auch als den Schaftdurchmesser überragender oder seitlich einseitig in die Nut eingreifender Vorsprung ausgebildet sein, der in die Projektionsfläche der Futterbacken eingreift.

## Patentansprüche

1. Einrichtung an Werkzeugmaschinen, insbesondere Handbohr- und/oder Schlaggeräten, die zur Übertragung einer Dreh- und/oder einer Schlagbewegung auf ein Werkzeug (1) mit drei zum Schaftende hin offenen Drehmitnahmenuten (7, 8) geeignet ist und eine Aufnahmebohrung (25) mit nach innen vorstehenden Drehmitnehmern (26, 27) mit im wesentlichen ebenen Flanken (28) aufweist, welche Drehmitnehmer in die offenen Nuten (7, 8) des Werkzeugs (1) eingreifen, rotationssymmetrisch angeordnet sind, gleich breit sind und etwa parallel zueinander verlaufende Flanken (28) aufweisen, dadurch gekennzeichnet, daß die Drehmitnehmer (26, 27) unbeweglich in der Aufnahmebohrung festgelegt sind und daß gegenüber einem der Drehmitnehmer (26, 27) ein Verriegelungselement (30) in der Aufnahmebohrung (25) angeordnet ist, welches in eine zum Schaftende des Werkzeuges (1) hin zumindest teilweise geschlossene Nut (18) einzugreifen vermag.

2. Einrichtung nach Anspruch 1, dadurch gekennzeichnet, daß einer der Drehmitnehmer (27) in radialer Richtung länger als die beiden anderen ausgebildet ist.

3. Einrichtung nach einem der vorhergehenden Ansprüche 1 oder 2, dadurch gekennzeichnet, daß der längere Drehmitnehmer (27) an seinem Ende abgerundet ist.

4. Einrichtung nach Anspruch 2 oder 3, dadurch gekennzeichnet, daß das Verriegelungselement (30) gegenüber dem längeren Drehmitnehmer (27) angeordnet ist.

5. Einrichtung nach einem der vorhergehenden Ansprüche, dadurch gekennzeichnet, daß die Aufnahmebohrung (25) einen Innendurchmesser im Bereich zwischen 11 mm und etwa 13 mm aufweist.

6. Werkzeug zur Verwendung in Bohrfuttern oder in Werkzeugaufnahmen von Handbohr- oder Schlaggeräten mit einem Schaft (2), einem beliebigen Werkzeugkopf (4) und einem Einsteckende (3), welcher Schaft an seinem Umfang in gleichen Winkelabständen drei gleichbreite zum Schaftende hin offene Nuten (7, 8) mit etwa parallel zueinander verlaufenden Seitenwänden (9, 10) aufweist, dadurch gekennzeichnet, daß mindestens eine zum Schaftende hin geschlossene, zusätzliche Nut (18) vorgesehen ist, und daß mindestens eine Seitenwand (9, 10) einer offenen Nut (7, 8) am Schaftende ein Sperrglied (17) aufweist, das den sonst freien Querschnitt der zugeordneten Nut (7, 8) verengt.

7. Werkzeug nach Anspruch 6, dadurch gekennzeichnet, daß die Ränder (15) der Nuten (7, 8) zur Anlage von Futterbacken (22) Anlageflächen (16) nach Art einer Anfasung aufweisen, die unter etwa 60° zur Mittelebene (11) der jeweiligen Nut (7, 8) verlaufen und von denen mindestens eine vor dem Schaftende (13) endet.

8. Werkzeug nach Anspruch 6 oder 7, dadurch gekennzeichnet, daß die geschlossene Nut (18) auf einer zwischen den offenen Nuten (7) verbleibenden Rippe (19) angeordnet ist.

9. Werkzeug nach einem der vorhergehenden Ansprüche, dadurch gekennzeichnet, daß die geschlossene Nut (18) allseits geschlossen ist und keine Verbindung zu den offenen Nuten (7,8) hat.

10. Werkzeug nach einem der vorhergehenden Ansprüche, dadurch gekennzeichnet, daß die offenen Nuten (7, 8) einen im wesentlichen rechteckigen Querschnitt aufweisen.

11. Werkzeug nach einem der vorhergehenden Ansprüche, dadurch gekennzeichnet, daß eine (7') der offenen Nuten tiefer ist als die anderen beiden.

12. Werkzeug nach einem der vorhergehenden Ansprüche, dadurch gekennzeichnet, daß die tiefere Nut (7') in ihrem Grund ausgerundet ist.

13. Werkzeug nach einem der vorhergehenden Ansprüche, dadurch gekennzeichnet, daß die geschlossene Nut (18) gegenüber der tieferen der offenen Nuten (7) angeordnet ist.

14. Werkzeug nach einem der vorhergehenden Ansprüche, dadurch gekennzeichnet, daß sein Schaft (2) einen Durchmesser im Bereich zwischen 10 und 14 vorzugsweise 12 und 13 mm hat.

15. Werkzeug nach einem der vorhergehenden Ansprüche, dadurch gekennzeichnet, daß die offenen Nuten (7, 8) eine Breite von 2 bis 4 mm aufweisen und mindestens ca. 2 mm tief sind.

## Claims

1. Device on machine tools, in particular portable drilling and/or percussive appliances, which is suitable for transmitting a rotary and/or a percussive movement to a tool (1) having three rotary driving grooves (7, 8) open towards the end of the shank and has a location hole (25) with inwardly projecting rotary driving elements (26, 27) with essentially flat flanks (28), which rotary driving elements engage in the open grooves (7, 8) of the tool (1), are arranged in rotationally symmetrical fashion, are of equal width and have flanks (28) which extend approximately parallel to one another, characterized in that the rotary driving elements (26, 27) are fixed immovably in the location hole and in that opposite one of the rotary driving elements (26, 27) a locking element (30) is arranged in the location hole (25), which locking element is capable of engaging in a groove (18) which is at least partially closed towards the end of the shank of the tool (1).

2. Device according to Claim 1, characterized in that one of the rotary driving elements (27) is longer in the radial direction than the other two.

3. Device according to either of the preceding Claims 1 or 2, characterized in that the longer rotary driving element (27) is rounded at its end.

4. Device according to Claim 2 or 3, characterized in that the locking element (30) is arranged opposite the longer rotary driving element (27).

5. Device according to one of the preceding claims, characterized in that the location hole (25) has an inside diameter in the range between 11 mm and about 13 mm.

6. Tool for use in drill chucks or in tool sockets of portable drilling or percussive appliances having a shank (2), any desired tool head (4) and an insertion end (3), which shank has at equal angular spacings on its circumference three grooves (7, 8) of equal width, open towards the end of the shank and having side walls (9, 10) extending approximately parallel to one another, characterized in that at least one additional groove (18) closed towards the end of the shank is provided and in that at least one side wall (9, 10) of an open groove (7, 8) has at the end of the shank a blocking element (17) which narrows the otherwise free cross-section of the associated groove (7, 8).

7. Tool according to Claim 6, characterized in that, to allow chuck jaws (22) to bear against them, the rims (15) of the grooves (7, 8) have bearing surfaces (16) in the form of a chamfer which extend at about 60° to the centre plane (11) of the respective groove (7, 8) and of which at least one ends before the end (13) of the shank.

8. Tool according to Claim 6 or 7, characterized in that the closed groove (18) is arranged on a rib (19) remaining between the open grooves (7).

9. Tool according to one of the preceding claims, characterized in that the closed groove (18) is closed on all sides and is not connected to the open grooves (7, 8).

10. Tool according to one of the preceding claims, characterized in that the open grooves (7, 8) have an essentially rectangular cross-section.

11. Tool according to one of the preceding claims, characterized in that one (7') of the open grooves is deeper than the other two.

12. Tool according to one of the preceding claims, characterized in that the base of the deeper groove (7') is rounded.

13. Tool according to one of the preceding claims, characterized in that the closed groove (18) is arranged opposite the deeper of the open grooves (7).

14. Tool according to one of the preceding claims, characterized in that its shank (2) has a diameter in the range between 10 and 14, preferably 12 and 13 mm.

15. Tool according to one of the preceding claims, characterized in that the open grooves (7, 8) have a width of 2 to 4 mm and are at least 2 mm deep approximately.

## Revendications

1. Dispositif pour machines-outils, en particulier appareils de perçage à main et/ou appareils à percussion, qui est approprié pour transmettre un mouvement de rotation et/ou un mouvement de percussion à un outil (1) avec trois rainures d'entraînement en rotation (7, 8) ouvertes en direction de l'extrémité de la tige et un alésage de réception (25) avec des entraîneurs en rotation (26, 27), faisant saillie vers l'intérieur, avec des flancs sensiblement plans (28), lesquels entraîneurs en rotation viennent en prise dans les rainures ouvertes (7, 8) de l'outil (1), sont disposés de façon symétrique de révolution, ont la même largeur et présentent des flancs (28) qui s'étendent à peu près parallèlement les uns aux autres, dispositif caractérisé en ce que les entraîneurs en rotation (26, 27) sont fixés de façon immobile dans le perçage de réception et en ce que l'on dispose en face de l'un des entraîneurs (26, 27) un élément de verrouillage (30) dans l'alésage de réception (25), élément qui peut venir en prise dans une rainure (18) au moins en partie fermée en direction de l'extrémité de la tige de l'outil (1).

2. Dispositif selon la revendication 1, caractérisé en ce que l'un des entraîneurs en rotation (27) est constitué dans le sens radial de façon plus longue que les deux autres.

3. Dispositif selon l'une des revendications précédentes 1 ou 2, caractérisé en ce que l'entraîneur (27) qui est plus long est arrondi à son extrémité.

4. Dispositif selon la revendication 2 ou 3, caractérisé en ce que l'élément de verrouillage (30) est disposé en face de l'entraîneur en rotation qui est plus long.

5. Dispositif selon l'une des revendications précédentes, caractérisé en ce que l'alésage de réception (25) présente un diamètre intérieur qui est compris entre 11 mm et environ 13 mm.

6. Outil prévu pour être utilisé dans des mandrins de perceuses ou dans des alésages pour outils d'appareils de perçage à main ou d'appareils à percussion avec une tige (2), n'importe quelle tête d'outil (4) et un embout (3), laquelle tige présente sur son pourtour à des intervalles angulaires égaux trois rainures (7, 8) de même largeur, ouvertes en direction de l'extrémité de la tige, avec des parois latérales (9, 10) qui s'étendent à peu près parallèlement les unes aux autres, outil caractérisé en ce qu'au moins il est prévu une rainure additionnelle (18) fermée en direction de l'extrémité de la tige, et en ce qu'au moins une paroi latérale (9, 10) d'une rainure ouverte (7, 8) présente à l'extrémité de la tige un organe de blocage (17), qui rétrécit la section transversale sans cela libre de la rainure correspondante (7, 8).

7. Outil selon la revendication 6, caractérisé en ce que les bords (15) des rainures (7, 8) présentent des surfaces d'appui (16) pour l'appui des mors du mandrin (22) à la manière d'un chanfreinage, qui s'étendent sous un angle d'environ 60° par rapport au plan moyen (11) de la rainure correspondante (7, 8) et parmi lesquelles au moins l'une se termine avant la fin de la tige (13).

8. Outil selon la revendication 6 ou 7, caractérisé en ce que la rainure fermée (18) est disposée sur une nervure (19) qui demeure entre les rainures ouvertes (7).

9. Outil selon l'une des revendications précédentes, caractérisé en ce que la rainure fermée (18) est fermée de tous les côtés et n'a pas de liaison avec les rainures ouvertes (7, 8).

10. Outil selon l'une des revendications précédentes, caractérisé en ce que les rainures ouvertes (7, 8) présentent une section transversale sensiblement rectangulaire.

11. Outil selon l'une des revendications précédentes, caractérisé en ce que l'une des rainures ouvertes, la rainure (7) est plus profonde que les deux autres.

12. Outil selon l'une des revendications précédentes, caractérisé en ce que la rainure plus profonde (7') a son fond arrondi.

13. Outil selon l'une des revendications précédentes, caractérisé en ce que la rainure fermée (18) est disposée en face de la plus profonde des rainures ouvertes (7).

14. Outil selon l'une des revendications précédentes, caractérisé en ce que la tige (2) a un diamètre compris entre 10 et 14 mm et de préférence 12 et 13 mm.

15. Outil selon l'une des revendications précédentes, caractérisé en ce que les rainures ouvertes (7, 8), présentent une largeur de 2 à 4 mm et ont une profondeur d'au moins environ 2 mm.
